(19) Europäisches Patentamt
European Patent Office
Office européen des brevets

(11) **EP 2 104 908 B1**

(12) **EUROPEAN PATENT SPECIFICATION**

(45) Date of publication and mention
of the grant of the patent:
**27.06.2012 Bulletin 2012/26**

(51) Int Cl.:
**G06K 9/48** (2006.01)   **G06K 9/00** (2006.01)

(21) Application number: **08701481.7**

(22) Date of filing: **15.01.2008**

(86) International application number:
**PCT/EP2008/050370**

(87) International publication number:
**WO 2008/087127 (24.07.2008 Gazette 2008/30)**

(54) **SHAPE REPRESENTATION USING FOURIER TRANSFORMS**

FORMENDARSTELLUNG ÜBER FOURIER-TRANSFORMATIONEN

REPRÉSENTATION D'UNE FORME À L'AIDE DE TRANSFORMÉES DE FOURIER

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **17.01.2007 US 654496**

(43) Date of publication of application:
**30.09.2009 Bulletin 2009/40**

(73) Proprietor: **Monro, Donald Martin**
**Frome, Somerset BA11 6RS (GB)**

(72) Inventor: **Monro, Donald Martin**
**Frome, Somerset BA11 6RS (GB)**

(74) Representative: **Maggs, Michael Norman et al**
**Kilburn & Strode LLP**
**20 Red Lion Street**
**London WC1R 4PJ (GB)**

(56) References cited:
**US-A1- 2006 147 094    US-B1- 6 801 661**

- **WYATT H J: "THE FORM OF THE HUMAN PUPIL" VISION RESEARCH, PERGAMON PRESS, OXFORD, GB, vol. 35, no. 14, July 1995 (1995-07), pages 2021-2036, XP001077732 ISSN: 0042-6989**
- **COSTA L DA F: "Estimating derivatives and curvature of open curves" PATTERN RECOGNITION, ELSEVIER, GB, vol. 35, no. 11, November 2002 (2002-11), pages 2445-2451, XP004819285 ISSN: 0031-3203**
- **SAIT SENER ET AL: "Affine invariant fitting of algebraic curves using Fourier descriptors" PATTERN ANALYSIS AND APPLICATIONS, SPRINGER-VERLAG, LO, vol. 8, no. 1-2, 1 September 2005 (2005-09-01), pages 72-83, XP019381480 ISSN: 1433-755X**
- **NIEMEL L P W ET AL: "A NOVEL DESCRIPTION OF HANDWRITTEN CHARACTERS FOR USE WITH GENERALISED FOURIER DESCRIPTORS" EUROPEAN TRANSACTIONS ON TELECOMMUNICATIONS AND RELATED TECHNOLOGIES, AEI, MILANO, IT, vol. 3, no. 5, 1 September 1992 (1992-09-01), pages 455-464, XP000315364 ISSN: 1120-3862**
- **EL OIRRAK A ET AL: "Affine invariant descriptors using Fourier series" August 2002 (2002-08), PATTERN RECOGNITION LETTERS, ELSEVIER, AMSTERDAM, NL, PAGE(S) 1109-1118 , XP004349759 ISSN: 0167-8655 the whole document**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to shape representation using Fourier Transforms. The invention finds particular application in biometrics, namely in the generation of approximate representations of the outer and/or inner boundary of the iris in the human eye.

Ghosh and Jain ("An Algebra or Geometric Shape", IEEE Computer Graphics and Applications, 1993, 50) describe the use of Fast Fourier Transforms (FFTs) to model the outline of a shape by tracking around its outer periphery.

It is of considerable importance in biometric systems that rely on iris precognition to be able to identify and map accurately both the outer edge of the iris and also the inner edge (the periphery of the pupil). Many iris precognition systems assume that the shape of the pupil is always circular, an assumption which may be inaccurate in many cases. Indeed even when pupils are circular, they tend to become elongate or oblong when viewed from an angle.

Some research into non-circular pupil vocalisation has been carried out: See B, Bonney, R. Lives, D. Etter, and D. Yingzi, "Iris pattern extraction using bit planes and standard deviations," Conference Record of the Thirty-Eighth Asilomar Conference on Signals, Systems and Computers, 2004, Y. Du, B. L. Bonney, R, W, Ives, D. M. Etter, and R. Schultz, "Analysis of Partial Iris Precognition Using a 1-D Approach", Proceedings of the 2005 IEEE International Conference on Acoustics, Speech, and Signal Processing, March 18-23, 2005. However, it is not always convenient, or even possible, to locate the boundary at equally-spaced intervals, and since standard Fourier Transform fits require equal spacings, a variety of methods of re-mapping or re-parameterization have been developed to force the data into a form in which the standard transforms can be used.

These methods tend to be complex and there is accordingly still a need for an approach which can in a straightforward way approximate a boundary given a number of points (which may not be equally spaced) on that boundary.

The closest prior art is considered to be Wyatt H J: "The form of the Human Pupil", Vision Research, Pergamon Press, Oxford, GB, vol. 35, no. 14, July 1995 (1995-07), pages 2021-2036. This document discloses those features set out in the precharacterising portion of claim 1.

Methods for spectral analysis of unequally sampled data are known from, e.g., "Numerical Recipes in C", Second Edition, pp. 575-577 and the earlier publications:

F.J.M. Barning - "The Numerical Analysis of the Light-Curve of 12 Lacertae", Bulleting of the Astronomical Institutes of the Netherlands, vol. 17, no. 1, pp. 22-28, 1963.
P. Vanicek - "Further Development and Properties of the Spectral Analysis by Least-Squares", Astrophysics and Space Science 12, pp. 10-33, 1971.

These publications disclose least-square fitting of Fourier frequencies originating from unequally sampled data.

According to the present invention a method of approximating an iris boundary is characterised by those features set out in the characterising portion of claim 1.

Preferably, this method is used to map the inner boundary of the iris (or, equivalently, the outer boundary of the pupil) of a human eye. Alternatively, it may be used to map the outer iris boundary.

In the method described, the use of higher harmonics provides excellent pupil localisation, both on general and on non-ideal eye images. The method provides excellent results on the vast majority of pupils which are significantly non-circular.

The invention may be carried into practice in a number of ways and one specific embodiment will now be described, by way of example, with reference to the accompanying drawings, in which:

Figure 1, shows a non-circular pupil shape, as image; and
Figure 2, shows an approximation to that shape.

The way in which an embodiment of the invention may be applied to a particular problem, that of characterising a non-circular pupil shape, will now be described.

First, an eye may be imaged, and the image analysed to identify a plurality of points 10, which occur on the image pupil/iris boundary 12. To do this, an approximate pupil location may be first determined by searching for a dark area of significant size close to the image centre. A histogram analysis may then be carried out to find a more exact centre as well as the average pupil radius. This approximate circular pupil boundary may then be examined in detail to obtain the required number of edge points 10. In the preferred embodiment, 16 such points are identified. It will be understood by those skilled in the art that other methods may be employed to locate points on the pupil/iris boundary and the scope of the claimed subject matter is not limited in this respect

It will also be understood that the points 10 may not necessarily be equally spaced around the edge of the pupil. Indeed, in some image part of the boundary 14 may be obscured by an eyelid and/or eyelashes 16.

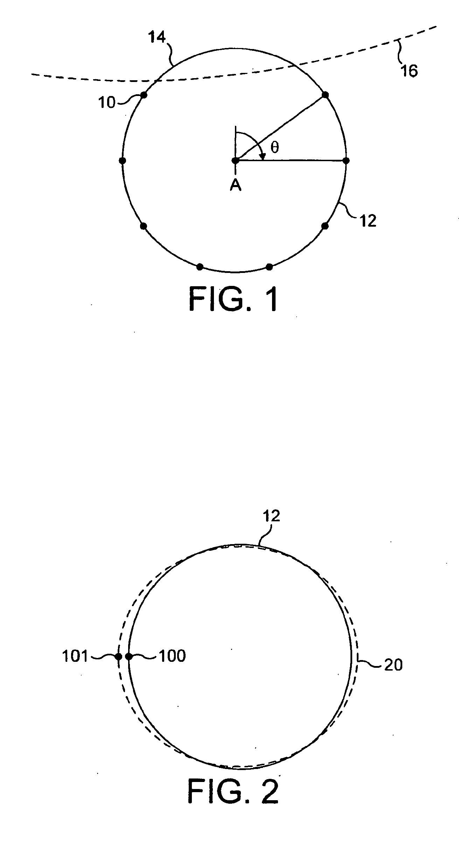

Once the boundary points 10 have been identified, those points can be used to generate a mathematical approximation 20 of the actual curve 12, as is shown in Figure 2. In the present invention, the fitted curve 20 is a Fourier Series least squares approximation, as a function of angle 0, or the distance of the points 10 from a notional fixed point A (see Figure 1).

We wish to describe the distance $d(\theta)$ of a curve in the plane from a known or assumed centre A as a harmonic function of the angle $\theta$ in the form of a ID Fourier Series, For simplicity, we will assure the function $d(\theta)$ to be single valued in $\theta$.

$$d(\theta) = \sum_{n=0}^{N} a_n \cos(n\theta) + b_n \sin(n\theta)$$

A standard discrete Fourier Series such as a FFT is a least squares fit of regularly spaced data, and because of the orthogonality of the functions cos and sin results in a standard formula by which $a_n$ and $b_n$ may be calculated. However, such an approach cannot generally be used here, as the points we need to fit $\{r_i, \theta_i; i = 1 \cdots M\}$ may be irregular in $\theta_i$.

If the error in the fit is:

$$E(\theta_i) = d(\theta_i) - r_i$$

Then we wish to find $\{a_n, b_n; n=0 \cdots N\}$ hich minimizes the sum of squares of the error,

$$E^2 = \sum_{i=1}^{M} E(\theta_i)^2 = \sum_{i=1}^{M} (d(\theta_i) - r_i)^2$$
$$= \sum_{i=1}^{M} \left[ \left\{ \sum_{n=0}^{N} a_n \cos n\theta_i + b_n \sin n\theta_i \right\} - r_i \right]^2$$

To do this we differentiate with respect to $a_k$ and $b_k$ and equate to zero in the usual way:

$$\frac{\partial E^2}{\partial a_k} = \sum_{i=1}^{M} 2 \left[ \sum_{n=0}^{N} a_n \cos n\theta_i + b_n \sin n\theta_i - r_i \right] \cos k\theta_i = 0$$
$$\frac{\partial E^2}{\partial b_k} = \sum_{i=1}^{M} 2 \left[ \sum_{n=0}^{N} a_n \cos n\theta_i + b_n \sin n\theta_i - r_i \right] \sin k\theta_i = 0$$

Noting that $b_0 = 0$, this can be expressed as the system of linear equations

$$PV = C$$

Where the unknowns are $V$;

$$V = \begin{bmatrix} a_0 \\ a_1 \\ \vdots \\ a_N \\ b_1 \\ \vdots \\ b_N \end{bmatrix}$$

and the right hand side is

$$C = \begin{bmatrix} C_0 \\ C_1 \\ \vdots \\ C_N \\ C_{N+1} \\ \vdots \\ C_{2N} \end{bmatrix}$$

with $C_0 = \sum_{i=0}^{M} r_i$ , $C_k = \sum_{i=0}^{M} r_i \cos k\theta_i$ and $C_{N+k} = \sum_{i=0}^{M} r_i \sin k\theta_i$ and for $k = 1 \cdots N$

The $2N + 1$ by $2N + 1$ matrix $P$ is

$$P_{k,n} = \sum_{i=1}^{M} \cos n\theta_i \cos k\theta_i \quad \text{for } k = 0 \cdots N \text{ and } n = 0 \cdots N \quad \text{(Upper Left Matrix)}$$

$$P_{k,N+n} = \sum_{i=1}^{M} \sin n\theta_i \cos k\theta_i \quad \text{for } k = 0 \cdots N \text{ and } n = 1 \cdots N \quad \text{(Upper Right Matrix)}$$

$$P_{N+k,n} = \sum_{i=1}^{M} \cos n\theta_i \sin k\theta_i \quad \text{for } k = 1 \cdots N \text{ and } n = 0 \cdots N \quad \text{(Lower Left Matrix)}$$

$$P_{N+k,N+n} = \sum_{i=1}^{M} \sin n\theta_i \sin k\theta_i \quad \text{for } k = 1 \cdots N \text{ and } n = 1 \cdots N \quad \text{(Lower Right Matrix)}$$

The matrix is symmetric. This can be solved for any $M$ and $N$ giving an approximation by $N$ harmonics to $M$ given points. Many standard methods are known for solving such a system of equations and the scope of the claimed subject matter is not limited in this respect.

In the case where $M=N$ and the points are equally spaced in $\theta_i = 0, {}^{2\pi}/_{N+1}, \cdots {}^{2N\pi}/_{N+1}$, the matrix $P$ is diagonal and the solution is exactly the Discrete Fourier transform.

Where M ≥ N, the equations above minimise the Root Mean Square (RMS) error between each measured point 100 on the actual boundary, and the closest corresponding point 101 of the fitted boundary 20. When the number of coefficients is 1, the fitted curve is a circle, and as the number of coefficients increase the RMS error generally decreases. It has been found in practice that good results in iris approximation can be obtained by using 5 coefficient,

In addiction to modelling the boundary of the pupil (or, equivalently, the inner boundary of the iris), the present embodiment may also be used to model the shape of the outer boundary of the iris. Once the inner and outer boundaries have been determined, biometric identification can proceed in the normal way based on the characteristics of the iris image between the inner and outer boundaries.

The position of the fixed point A (Figure 1) is not of great importance, and although the approximate centre of the pupil is a convenient point to take other points are not excluded - even points which lie outside the boundary being fitted. Of course, if the fixed point lies outside the boundary, the resulting function will no longer be single valued in 0, and a corresponding allowance for that will need to be made.

If there is a large variability in distances, an improved fit may sometimes be achieved using a multi pass approach: carry out a first fit, exclude any outliers which are greater than a cut-off value, and repent the calculation. The cut-off value may be fixed, or may be data dependent, for example a given number of standard deviations.

**Claims**

1. A method of approximating an iris boundary, comprising the steps of:

  (a) acquiring an image of an eye, including an iris boundary;
  (b) noting a plurality of spaced boundary points on the boundary;
  (c) selecting a fixed reference point within the boundary and
  (d) generating an approximate boundary representation comprising a least squares approximation by a Fourier Series as a function of angle $\theta i$ about said fixed point of the distance of said boundary points from said fixed point;

  **characterised in that** the spaced boundary points are not all equally spaced in $\theta_i$, in which said least-squares approximation minimises the sum of squares of errors taken over all of the unequally spaced boundary points, and in which the approximate boundary representation is generated by numerically solving the system of linear equations

$$PV = C$$

or a mathematical equivalent thereof, for the unknown matrix V, where:

$$V = \begin{bmatrix} a_0 \\ a_1 \\ \vdots \\ a_N \\ b_1 \\ \vdots \\ b_N \end{bmatrix}$$

$$C = \begin{bmatrix} C_0 \\ C_1 \\ \vdots \\ C_N \\ C_{N+1} \\ \vdots \\ C_{2N} \end{bmatrix}$$

with $C_0 = \sum_{i=0}^{M} r_i$ , $C_k = \sum_{i=0}^{M} r_i \cos k\theta_i$ and $C_{N+k} = \sum_{i=0}^{M} r_i \sin k\theta_i$ for k = 1···N, and where P is a 2N + 1 by 2N + 1 matrix given by:

$$P_{k,n} = \sum_{i=1}^{M} \cos n\theta_i \cos k\theta_i \quad \text{for } k = 0\cdots N \text{ and } n = 0\cdots N \text{ (Upper Left Matrix)}$$

$$P_{k,N+n} = \sum_{i=1}^{M} \sin n\theta_i \cos k\theta_i \quad \text{for } k = 0\cdots N \text{ and } n = 1\cdots N \text{ (Upper Right Matrix)}$$

$$P_{N+k,n} = \sum_{i=1}^{M} \cos n\theta_i \sin k\theta_i \quad \text{for } k = 1\cdots N \text{ and } n = 0\cdots N \text{ (Lower Left Matrix)}$$

$$P_{N+k,N+n} = \sum_{i=1}^{M} \sin n\theta_i \sin k\theta_i \quad \text{for } k = 1\cdots N \text{ and } n = 1\cdots N \text{ (Lower Right Matrix).}$$

2. A method as claimed in claim 1 in which the boundary is the pupil/iris boundary.

3. A method as claimed in claim 1 in which the boundary is the outer iris boundary.

4. A method as claimed in claim 1 in which the fixed reference point is in the approximate centre of the iris boundary.

5. A method as claimed in claim 1 in which, following step (d), any boundary points which lie more than a selected distance from the boundary representation are excluded, and step (d) is then repeated.

**Patentansprüche**

1. Verfahren zur Approximierung einer Iris-Begrenzung, mit den Schritten:

   (a) Erfassen eines Bildes eines Auges, das eine Iris-Begrenzung enthält;
   (b) Vormerken mehrerer in Abstand angeordneter Begrenzungspunkte auf der Begrenzung;
   (c) Auswählen eines festen Bezugspunktes innerhalb der Begrenzung; und
   (d) Erzeugen einer approximierten Begrenzungsdarstellung mittels einer Fehlerquadrat-Approximation des Abstandes der Begrenzungspunkte von dem festen Punkt durch eine Fourier-Reihe als eine Funktion des Winkels ($\theta_i$) um den festen Punkt;

   **dadurch gekennzeichnet, dass** die in Abstand angeordneten Begrenzungspunkte nicht alle in gleichem Abstand in $\theta_i$ angeordnet sind, in welchem die Fehlerquadrat-Approximation die Summe von über alle von den in ungleichem Abstand angeordneten Begrenzungspunkten genommenen Fehlerquadraten minimiert, und in welchem die approximierte Begrenzungsdarstellung durch numerische Lösung des Systems linearer Gleichungen

$$PV = C$$

oder ein mathematisches Äquivalent davon für die unbekannte Matrix V erzeugt wird, wobei:

$$V = \begin{bmatrix} a_0 \\ a_1 \\ \vdots \\ a_N \\ b_1 \\ \vdots \\ b_N \end{bmatrix}$$

$$C = \begin{bmatrix} C_0 \\ C_1 \\ \vdots \\ C_N \\ C_{N+1} \\ \vdots \\ C_{2N} \end{bmatrix}$$

mit $C_0 = \sum_{i=0}^{M} r_i$ , $C_k = \sum_{i=0}^{M} r_i \cos k\theta_i$ und $C_{N+k} = \sum_{i=0}^{M} r_i \sin k\theta_i$ für $k = 1...N$ ist; und wobei $P$ eine $2N+1 \times 2N+1$ Matrix ist, die gegeben ist, durch

$$P_{k,n} = \sum_{i=1}^{M} \cos n\theta_i \cos k\theta_i \quad \text{für } k = 0...N \text{ und } n = 0...N \quad \text{(obere linke Matrix)}$$

$$P_{k,N+n} = \sum_{i=1}^{M} \sin n\theta_i \cos k\theta_i \quad \text{für} \quad k = 0...N \text{ und } n = 1...N \quad \text{(obere rechte Matrix)}$$

$$P_{N+k,n} = \sum_{i=1}^{M} \cos n\theta_i \sin k\theta_i \quad \text{für} \quad k = 1...N \text{ und } n = 0...N \quad \text{(untere linke Matrix)}$$

$$P_{N+k,N+n} = \sum_{i=1}^{M} \sin n\theta_i \sin k\theta_i \quad \text{für} \quad k = 1...N \text{ und } n = 1...N \quad \text{(untere rechte Matrix)}$$

2. Verfahren nach Anspruch 1, in welchem die Begrenzung die Pupillen/Iris-Begrenzung ist.

3. Verfahren nach Anspruch 1, in welchem die Begrenzung die äußere Iris-Begrenzung ist.

4. Verfahren nach Anspruch 1, in welcher der feste Bezugspunkt sich in dem angenäherten Mittelpunkt der Iris-Begrenzung befindet.

5. Verfahren nach Anspruch 1, in welchem anschließend an den Schritt (d) alle Begrenzungspunkte, welche mehr als um einen gewählten Abstand von der Begrenzungsdarstellung entfernt liegen, ausgeschlossen werden, und dann der Schritt (d) wiederholt wird.

**Revendications**

1. Procédé d'approximation d'une limite d'iris, comprenant les étapes consistant à :

    (a) acquérir une image d'un oeil, comprenant une limite d'iris ;
    (b) noter une pluralité de points de limite espacés sur la limite ;
    (c) sélectionner un point de référence fixe dans la limite ; et
    (d) générer une représentation de limite approximative comprenant une approximation des moindres carrés par une série de Fourier en fonction d'un angle $\theta i$ autour dudit point fixe de la distance desdits points de limite depuis ledit point fixe ;

    **caractérisé en ce que** les points de limite espacés ne sont pas tous espacés de façon égale dans $\theta i$, dans lequel ladite approximation des moindres carrés minimise la somme de carrés d'erreurs prise sur tous les points de limite espacés de façon inégale, et dans lequel la représentation de limite approximative est générée en résolvant numériquement le système d'équations linéaires

$$PV = C$$

ou un équivalent mathématique de cette dernière, pour la matrice inconnue V, où :

$$V = \begin{bmatrix} a_0 \\ a_1 \\ \vdots \\ a_N \\ b_1 \\ \vdots \\ b_N \end{bmatrix}$$

$$C = \begin{bmatrix} C_0 \\ C_1 \\ \vdots \\ C_N \\ C_{N+1} \\ \vdots \\ C_{2N} \end{bmatrix}$$

avec $C_0 = \sum_{i=0}^{M} r_i$ , $C_k = \sum_{i=0}^{M} r_i \cos k\theta_i$ et $C_{N+k} = \sum_{i=0}^{M} r_i \sin k\theta_i$ pour $k = 1...N$, et où $P$ est un $2N + 1$ par

matrice $2N + 1$ donnée par :

$$P_{k,n} = \sum_{i=1}^{M} \cos n\theta_i \cos k\theta_i$$

pour $k = 0 \cdots N$ et $n = 1 \cdots N$ (matrice supérieure gauche)

$$P_{k,N+n} = \sum_{i=1}^{M} \sin n\theta_i \cos k\theta_i$$

pour $k = 0 \cdots N$ et $n = 1 \cdots N$ (matrice supérieure droite)

$$P_{N+k,n} = \sum_{i=1}^{M} \cos n\theta_i \sin k\theta_i$$

pour $k = 1 \cdots N$ et $n = 0 \cdots N$ (matrice inférieure gauche)

$$P_{N+k.N+n} = \sum_{i=1}^{M} \sin n\theta_i \sin k\theta_i$$

pour $k = 1\cdots N$ et $n = 1\cdots N$ (matrice inférieure droite).

**2.** Procédé selon la revendication 1, dans lequel la limite est la limite pupille/iris.

**3.** Procédé selon la revendication 1, dans lequel la limite est la limite d'iris externe.

**4.** Procédé selon la revendication 1, dans lequel le point de référence fixe est dans le centre approximatif de la limite d'iris.

**5.** Procédé selon la revendication 1, dans lequel, à la suite de l'étape (d), tout point de limite qui se trouve à plus d'une distance sélectionnée de la représentation de limite est exclu, et l'étape (d) est ensuite répétée.

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GHOSH ; JAIN.** An Algebra or Geometric Shape. *IEEE Computer Graphics and Applications,* 1993, 50
- **B, BONNEY ; R. LIVES ; D. ETTER ; D. YINGZI.** Iris pattern extraction using bit planes and standard deviations. *Conference Record of the Thirty-Eighth Asilomar Conference on Signals, Systems and Computers,* 2004
- **Y. DU ; B. L. BONNEY ; R, W, IVES ; D. M. ETTER ; R. SCHULTZ.** Analysis of Partial Iris Precognition Using a 1-D Approach. *Proceedings of the 2005 IEEE International Conference on Acoustics, Speech, and Signal Processing,* 18 March 2005

- The form of the Human Pupil. **WYATT H J.** Vision Research. Pergamon Press, July 1995, vol. 35, 2021-2036
- Numerical Recipes in C. 575-577
- **F.J.M. BARNING.** The Numerical Analysis of the Light-Curve of 12 Lacertae. *Bulleting of the Astronomical Institutes of the Netherlands,* 1963, vol. 17 (1), 22-28
- **P. VANICEK.** Further Development and Properties of the Spectral Analysis by Least-Squares. *Astrophysics and Space Science,* 1971, vol. 12, 10-33